# EUROPEAN PATENT APPLICATION

(11) **EP 2 461 086 A1**
(43) Date of publication of application: **06.06.2012**
(21) Application number: 10803813.4
(22) Date of filing: 30.07.2010
(51) Int. Cl.: F21S 8/00, G02B 5/04

(54) **ILLUMINATION DEVICE FOR STAGE LIGHTING WITH HIGH LIGHT-COMBINING EFFICIENCY**

(30) Priority: 31.07.2009 CN 200920134368 U
(71) Applicant: Appotronics Corporation Limited, Guangdong 518057 (CN)
(72) Inventor: LI, Yi, Guangdong 518057 (CN)
(74) Representative: Miller, James Lionel Woolverton
(86) International application number: PCT/CN2010/001161
(87) International publication number: WO 2011/011980

(57) **Abstract**

An illumination device for stage lighting with high light-combining efficiency includes at least two LED arrays (1); lens arrays (2) corresponding to the LED arrays (1); a color combining device (3) for splitting light; and a focusing lens (4). Each LED chip in the same LED array (1) has the same color.

## Description

### BACKGROUND OF THE INVENTION

### Field of the Invention

This invention relates to illumination devices and systems as well as related functions and components, and in particular, it relates to illumination devices and systems useful in stage lighting and the light combining devices used in such systems.

### Description of the Related Art

LED (light emitting diodes) light sources are clean and energy efficient light sources. The achievable luminous flux of LED light sources increases every year. Currently, LED light sources are mostly used in low power, low end color-changing lighting products.

Most high power stage lights currently use metal halide discharge lamps. Such lamps are white light sources, and have relatively short life, typically from a few hundred to a few thousand hours. As the emission spectrum of metal halide discharge lamps is a continuous white spectrum, color lights of various colors required by stage lighting are obtained by using color filters. Such color lights and the resulting projected patterns have relatively low color saturation, and their colors are neither very vivid nor very rich.

Using LED light sources for stage lighting can achieve monochromatic lights without using filters. Further, by adjusting the drive current of LEDs of various base colors (e.g. primary colors), desired colors of the output monochromatic light can be achieved. By taking advantage of the relatively high saturation of monochromatic LED light sources, a great number of colors can be achieved for stage lighting, making the system more flexible. However, current LED light sources tend to generate a large amount of heat, and their light emitting efficiency is still relatively low. As single LED chips still cannot provide sufficiently high output power, high power stage lighting systems must rely on LED arrays to achieve the desired luminous flux.

Chinese patent application No. 200720061982.0 describes a light source system for stage lighting, which employs a LED array and a large heat dissipation device to provide a power of 100 W. By controlling the turning on and off of the LED of different colors, which are arranged in an intermixed manner within the LED array, the color of the output light may be adjusted.

The above technologies have certain shortcomings. When the red (R), green (G) and blue (B) LEDs that are intermixed in the LED array are controlled to generate a white light, the brightness and color uniformity of the illumination device are unsatisfactory. Thus, this type of light sources are typically used in illumination devices that have relatively low requirements on spatial uniformity of the light, such as PAR (parabolic aluminum reflector) lights, building exterior illumination lights or other outdoor lights, floodlight, etc. When the requirement on output power is high, the size of the LED arrays becomes larger, resulting in increased size of the illumination device and increased etendue of the light. These tend to decrease the collection efficiency of the LED light. For these reasons, it is difficult for current technologies to meet the requirements for high power rotating and oscillating pattern lights.

### SUMMARY OF THE INVENTION

Accordingly, the present invention is directed to a stage lighting system and related methods that substantially obviate one or more of the problems due to limitations and disadvantages of the related art. An object of the present invention is to provide an illumination device with high light combining efficiency that generates light with increased brightness and color uniformity.

To achieve these and other advantages and in accordance with the purpose of the present invention, as embodied and broadly described, the present invention provides an illumination device for stage lighting with high light-combining efficiency, which includes: at least two LED (light emitting diode) arrays packaged on heat dissipating substrates, each LED array including a plurality of LED chips emitting a same colored light; at least two lens arrays corresponding to the at least two LED arrays, each lens array having a plurality of lenses, wherein each lens is aligned with one LED chip to collimate light emitted by the LED chip into a near-parallel light; a wavelength-based light combining device for combining the near-parallel light from the LED chips into one light beam; and a focusing lens for focusing the light beam onto a light output port.

The illumination device may include two LED arrays and two corresponding lens arrays, wherein the wavelength-based light combining device is a dichroic filter which combines the near-parallel light from the two LED arrays into one light beam by reflecting one light and transmitting the other. Or, the illumination device may include three LED arrays and three corresponding lens arrays, wherein the wavelength-based light combining device is an X-shaped dichroic filter device having three light input ports, each light input port being aligned with one LED array and the corresponding lens array.

In the above illumination devices, the X-shaped dichroic filter device may include three dichroic filters disposed perpendicularly to form a dichroic filter set, wherein two of the three dichroic filters have same optical properties and are disposed immediately adjacent two sides of a third one of the three dichroic filters. Or, the X-shaped dichroic filter device may include a dichroic prism set formed by four right-angle dichroic prisms adhered together with their right-angle edges against each other. The dichroic filters may be dichroic filter plates or glass plates coated with dichroic filter films.

The illumination device may further include a positioning device for positioning the heat dissipating substrates, the positioning device including at least one adjusting device for finely adjusting a translation position of the heat dissipating substrates.

The positioning device may further include at least one angle adjusting device for finely adjusting an angular position of the heat dissipating substrates.

The illumination device may further include a positioning device for positioning the wavelength-based light combining device, the positioning device including at least one adjusting device for finely adjusting an orientation of the wavelength-based light combining device.

The various positioning devices above may include sliding slots, gears, adjusting screws, set screws or springs.

In the above illumination devices, each LED array may be disposed adjacent the corresponding lens array with an air gap less than 1.5 mm between each LED chip and the corresponding lens.

The illumination device may further include a pattern plate carrying one or more patterns, wherein a selected pattern is aligned with the light output port.

A stage lighting system according to various embodiments of the present invention can achieve high brightness and superior color combination effects, and can increase output power. At the same time, it has a compact size and the output light has a relatively small etendue.

### BRIEF DESCRIPTION OF THE DRAWINGS

Figure 1 schematically illustrates a stage lighting system according to a first embodiment of the present invention.
Figure 2 schematically illustrates a light combining device of the system in Fig. 1.
Figure 3 schematically illustrates a stage lighting system using an alternative light combining device according to an alternative embodiment of the present invention.
Figure 4 schematically illustrates the coupling structure for the lens array and LED array in the system of Fig. 1 or Fig. 3.
Figures 5a and 5b schematically illustrate positioning and position adjusting devices for the LED array in the system of Fig. 1 or Fig. 3. Fig. 5a shows adjusting screws as an example; Fig. 5b shows sliding slots as an example.
Figure 6 schematically illustrates a stage lighting system according to a second embodiment of the present invention.

### DETAILED DESCRIPTION OF THE PREFERRED EMBODIMENTS

Embodiments of the present invention are described below with references to the drawings.

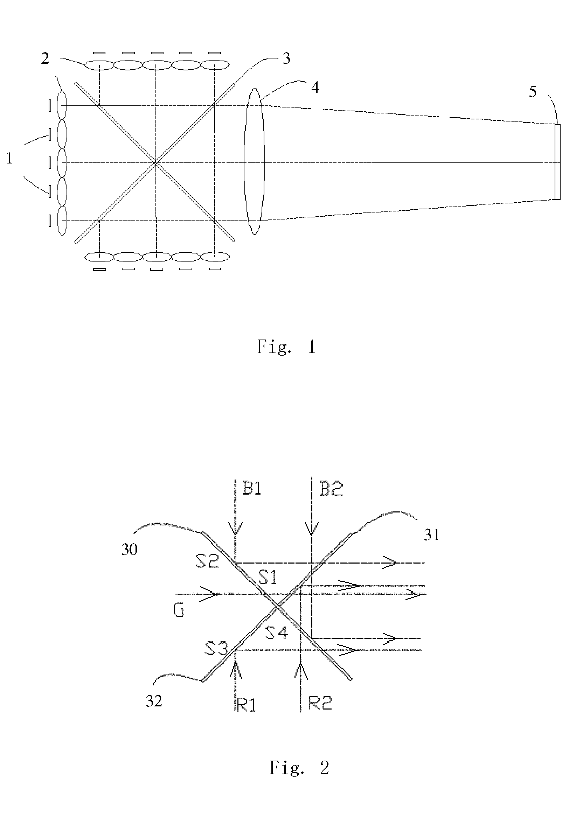

As shown in Fig. 1, the stage lighting system according to embodiments of the present invention includes at least two LED arrays 1 packaged on heat dissipating substrates, where the multiple LED chips on each LED array emit the same colored light; at least two lens arrays 2 corresponding to the at least two LED arrays, each lens array having multiple lenses, where each lens is aligned with one LED chip to maximize collection of the light, including large angle light, from the LED and to convert the collected light into a near-parallel light having a small divergence angle (the smaller the better); a wavelength-based light combining device 3 for combining the near-parallel light from the LED into one light beam toward a focusing lens 4, where the focusing lens focuses the light beam onto a light output port 5 of the stage lighting system.

In the illustrated example, three LED arrays are provided for generating red (R), green (G) and blue (B) lights, respectively, which are combined to produce output lights of various colors. The wavelength-based light combining device 3 is an X-shaped dichroic filter device having three light input ports, each light input port being aligned with one LED array and the corresponding lens array. As shown in Fig. 2, the X-shaped dichroic filter device may include three dichroic filters 30, 31, 32 disposed perpendicularly across each other to form a dichroic filter set, where two of the dichroic filters 31, 32 have the same optical properties and are disposed immediately adjacent the two sides of the third dichroic filter 30. The dichroic filters 30-32 may be dichroic filter plates, or glass plates coated with dichroic filter films. Typically, based on the sizes of their useful area, the thickness of the dichroic filter may be chosen to be 0.5 mm, 0.7 mm, or 1.1 mm. As shown in this figure, taking the example of glass plates coated with dichroic filter films, the dichroic filter 30 may be coated on its surface S1 with a filter film that reflects blue light and transmits red and green lights, and coated on its surface S2 with an anti-reflection film to increase transmission. The dichroic filters 31, 32 may be coated on their surfaces S4 with a filter film that reflects red light and transmits blue and green lights, and coated on their surfaces S3 with an anti-reflection film to increase transmission. When the R, G and B LED chips are all turned on, the X-shaped dichroic filter device outputs a uniformly mixed white light. Compared to conventional light combining methods, the X-shaped dichroic filter device has the advantages of high light transmission, compact size, and easy to achieve high power light combination, and can maintain the etendue of the combined light.

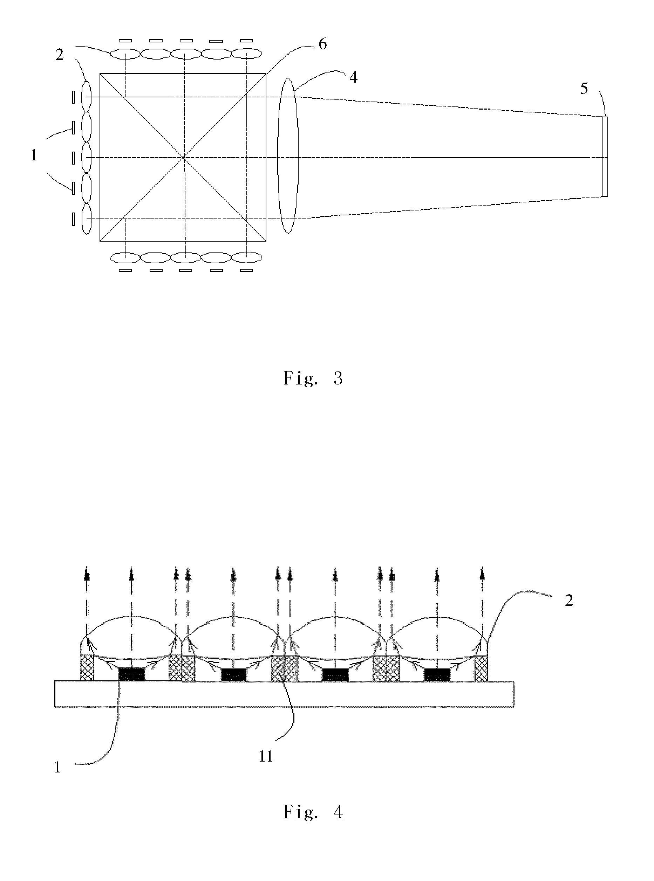

As shown in Fig. 3, the X-shaped dichroic filter device 3 can also use a dichroic prism set 6 formed by four right-angle dichroic prisms adhered together with their right-angle edge against each other. A disadvantage of this device is that the manufacturing process for right-angle dichroic prisms is relatively complex and their cost is relatively high. In addition, such a prism set is sensitive to the incident angle of the incident light, imposing a high requirement on the coating.

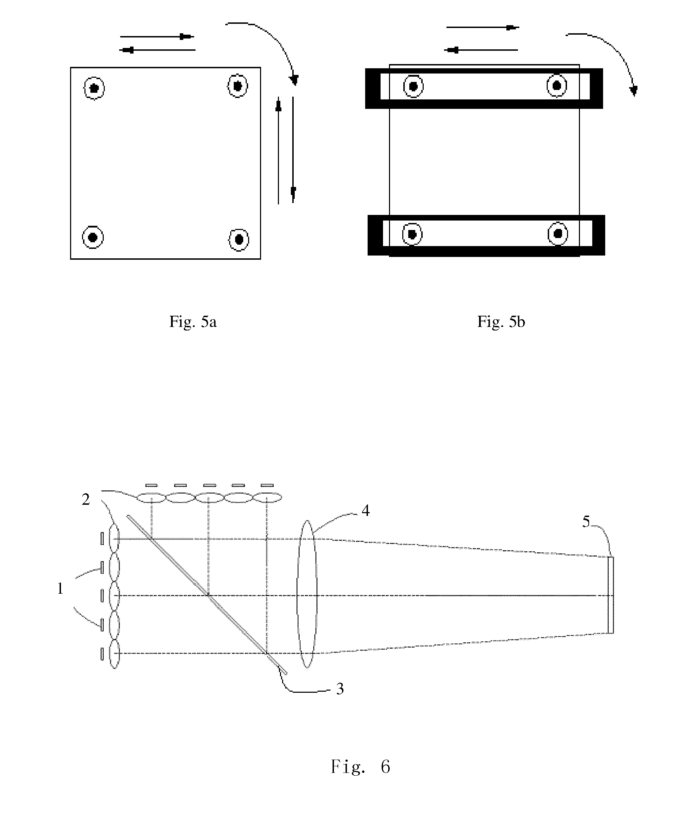

As shown in Figs. 5a and 5b, the stage lighting system according to embodiments of the present invention also includes a positioning device for positioning the heat dissipating substrates. The positioning device includes at least one adjusting device, such as a sliding slot (see Fig. 5b) or gears, for finely adjusting the translation position of the heat dissipating substrates to correct color cast caused by position deviation of the R, G, B LED chips. The positioning device may also include at least one angle adjusting device, such as an adjusting screw, set screw, spring, etc. (see Fig. 5a), for finely adjusting the angular position of the heat dissipating substrates to correct color non-uniformity caused by tilting of the LED arrays.

The stage lighting system according to embodiments of the present invention may also include a positioning device for positioning the wavelength-based light combining device, which includes an adjusting device for finely adjusting the orientation of the wavelength-based light combining device. The adjusting device for the wavelength-based light combining device may be used in place of or in addition to adjusting devices for the heat dissipating substrates.

As shown in Fig. 4, if the space between the lens array 2 and the LED chips is filled with silicone, while the flux of the light sources may be increased (the amount of increase is less than n² times, where n is the refractive index of the lenses), the etendue is also increased by n² times. Thus, for systems limited by projection f-number (f-number = focal distance/incident aperture or effective aperture), light loss may be significant. To solve this problem, in stage lighting systems according to embodiments of the present invention, each LED array 1 is disposed immediately adjacent to the corresponding lens array 2, and the LED array and the lens array are supported in a spaced relationship by a structure including but not limited to a web shaped support frame 11, so that an air gap of less than 1.5 mm is formed between the LED chip and the corresponding lens. This minimizes the etendue of the light source device, and increased the utilization of the light emitted by the LED chips. Tests show that the smaller the air gap, the more effective the light collection.

The stage lighting system according to embodiments of the present invention may also include a pattern plate carrying one or more patterns. A selected pattern may be aligned with the light output port 5.

When the requirement for color varieties is not high, a stage lighting system according to another embodiment of the present invention may have only two LED arrays 1, as shown in Fig. 6. The wavelength-based light combining device 3 is a dichroic filter, which combines the near-parallel light from the two LED arrays into one light beam by reflecting one light and transmitting the other.

It will be apparent to those skilled in the art that various modification and variations can be made in the stage lighting system and related method of the present invention without departing from the spirit or scope of the invention. Thus, it is intended that the present invention cover modifications and variations that come within the scope of the appended claims and their equivalents.

## Claims

1. An illumination device for stage lighting with high light-combining efficiency, comprising:
at least two LED (light emitting diode) arrays packaged on heat dissipating substrates, each LED array including a plurality of LED chips emitting a same colored light;
at least two lens arrays corresponding to the at least two LED arrays, each lens array having a plurality of lenses, wherein each lens is aligned with one LED chip to collimate light emitted by the LED chip into a near-parallel light;
a wavelength-based light combining device for combining the near-parallel light from the LED chips into one light beam; and
a focusing lens for focusing the light beam onto a light output port.

2. The device of claim 1, comprising two LED arrays and two corresponding lens arrays, wherein the wavelength-based light combining device is a dichroic filter which combines the near-parallel light from the two LED arrays into the one light beam by reflecting one light and transmitting the other;
or comprising three LED arrays and three corresponding lens arrays, wherein the wavelength-based light combining device is an X-shaped dichroic filter device having three light input ports, each light input port being aligned with one LED array and the corresponding lens array.

3. The device of claim 2, wherein the X-shaped dichroic filter device includes three dichroic filters disposed perpendicularly to form a dichroic filter set, and wherein two of the three dichroic filters have same optical properties and are disposed immediately adjacent two sides of a third one of the three dichroic filters;
or wherein the X-shaped dichroic filter device includes a dichroic prism set formed by four right-angle dichroic prisms adhered together with their right-angle edges against each other.

4. The device of claim 2 or 3, wherein the dichroic filters are dichroic filter plates or glass plates coated with dichroic filter films.

5. The device of claim 1, further comprising a positioning device for positioning the heat dissipating substrates, the positioning device including at least one adjusting device for finely adjusting a translation position of the heat dissipating substrates.

6. The device of claim 5, wherein the positioning device further includes at least one angle adjusting device for finely adjusting an angular position of the heat dissipating substrates.

7. The device of claim 1, further comprising a positioning device for positioning the wavelength-based light combining device, the positioning device including at least one adjusting device for finely adjusting an orientation of the wavelength-based light combining device.

8. The device of claim 5, 6 or 7, wherein the adjusting device includes sliding slots, gears, adjusting screws, set screws or springs.

9. The device of claim 1, wherein each LED array is disposed adjacent the corresponding lens array with an air gap less than 1.5 mm between each LED chip and the corresponding lens.

10. The devices of claim 1, further comprising a pattern plate carrying one or more patterns, wherein a selected pattern is aligned with the light output port.
